# EUROPEAN PATENT APPLICATION

(11) **EP 0 523 293 A1**
(43) Date of publication of application: **20.01.1993**
(21) Application number: 91306431.7
(22) Date of filing: 16.07.1991
(51) Int. Cl.: B01D 24/46

(54) **Filtration of liquids**

(71) Applicant: UNIFILT CORPORATION, Wilkes-Barre, Pennsylvania 18705 (US)
(72) Inventor: Walter, Thomas P., Wilkes-Barre, Pennsylvania 18705 (US)
(74) Representative: Shaw, Laurence

(57) **Abstract**

To prevent turbulence in the water in an underdrain (2) during gas cleansing, the underdrain comprising laterals (2) and containing gas chambers (8), a horizontal baffle (30) is present between a compensating chamber (6) and the gas chamber (8).

## Description

The invention relates to the filtration of liquids, in particular waste water.

One method of purifying liquid uses a filter bed having one or more layers of filtration material. The top layer consists of granular media which is made up of fine particulate matter such as anthracite, sand, carbon, or garnet. The underlying level comprises support or packing gravel. Underdrain laterals are present below the layer of gravel. These are long narrow pipes which are laid across or along the filter bed in side-by-side relation so that the entire lower portion of the filter bed beneath the gravel layer is composed of the laterals. The liquid to be filtered is supplied across the top of the granular layer. As it seeps through the granular layer, waste solids removed from the liquid accumulate and adhere to the particles of the granular layer. The liquid then flows through the granular layer through openings in the top of the underdrain laterals and then through a flume beneath the underdrain, through which the filtered liquid is discharged.

It is necessary to periodically remove the waste material from the granular and gravel layers. This is done by a backwash in which water is introduced via the flume beneath the underdrain, up through the underdrain into and through the gravel layer and the granular layer, from whence it is discharged. To make the backwash process more efficient, a gas such as air is often used to agitate the gravel and granular material to loosen and free adherent waste material into the surrounding water. After and or during the gas cycle, the backwash water is introduced to remove the waste material which has been loosened and freed by the gas. In one method, the gas step is immediately followed by backwash water; in another the gas step is immediately followed by a combined gas and backwash water step. The second procedure is more efficient but cannot be used when the granular material is very fine because some granular material is carried away by the gas bubbles in the backwash water and lost. A typical operation might be the use of gas only in the order of 3 to 5 standard cubic feet per minute per square foot of the filter bed for a period of 2 to 5 minutes. Then the gas at 2 to 5 standard cubic feet per square foot per minute is mixed with water at 5 to 7.5 U.S. gallons per minute per square foot for a period of 2 to 5 minutes. If the second cycle is backwash water only, up to 30 gallons per minute per square foot for a period of 3 to 5 minutes might be required depending on the filtration media.

US-A-4,065,391 discloses an underdrain which provides for the use of the gas for cleansing. Chambers are formed by inclined walls. This results in alternate chambers that mix gas and water and chambers that carry water only, with compensating orifices in the common walls. US-A-4,214,992 discloses a block with an air and water chamber in the centre and water dispensing chambers on both sides, the walls between the top and bottom being inclined to the vertical axis so that the chambers are rhombic in shape. When the gas and water mix in the chamber during the gas cleansing step, turbulence is often set up which creates standing waves. The turbulence often results in the mixing of the granular particles with the gravel, the introduction of granular particles into the chambers which can clog the holes in the top of the underdrain and in the inclined walls of the underdrain, and can even be destructive.

It is one object of the invention to provide an underdrain in which there is little or no turbulence in the water during the gas cleansing step and the combined gas and backwash water step. It is another object of the invention to provide an underdrain in which there is equal gas and water pressures and distribution between the parallel units of the underdrain laterals. It is another object of the invention to provide an underdrain which allows for easy manual adjustment of the level of the ports for the entry of backwash water to flow out of the underdrain to equalise the water pressure at each port and to equalise the distribution of the backwash water.

In one aspect the invention provides filter apparatus comprising a bed to receive liquid to be filtered, filter media being located in the bed, an underdrain beneath the media, the underdrain comprising a plurality of underdrain laterals and containing gas chambers characterised by means to provide that substantially only gas is present in the gas chamber when cleaning the filter media.

Preferably the laterals each comprise a primary chamber, a compensating chamber being present at the primary chamber, the gas chamber being above the compensating chamber. Most preferably a horizontal baffle is present between the compensating chamber and the gas chamber, the baffle being positioned to minimise liquid standing waves and turbulence in the other chambers when gas is supplied into the gas chamber.

In another aspect the invention provides a method of cleaning filter media located in a filter bed, an underdrain being present beneath the media, the underdrain comprising a plurality of laterals in communication with a flume, the method comprising passing liquid and/or gas up through the bed to loosen solids deposited on the media from the filtered liquid, characterised by passing gas into the media via a gas chamber in the laterals and ensuring that the chambers contain substantially only gas during the cleansing step.

In yet another aspect the invention provides a nozzle assembly for use in a filter bed having underdrain laterals, the assembly comprising a head with distribution holes characterised by a pipe extending down into the lateral, the pipe having at least one side hole for entry of cleansing gas into the pipe and an entrance adjacent the end of the pipe for entry of backwash liquid.

In order that the invention may be well understood it will now be described by way of example only with reference to the following drawings, in which:-
Figure 1 is a cross-section of an underdrain lateral;
Figure 2 is a plan view of the underdrain;
Figure 3 is a vertical section taken along the line 3-3 on Figure 2;
Figure 4 is an elevation partly in section taken along the line 4-4 on Figure 3;
Figure 5 is a cross-section of a filter bed including a wall sleeve distribution system;
Figure 6 is a cross-section of a filter bed having a centre flume distribution system;
Figure 7 is a cross-section of another underdrain lateral; and
Figure 8 is a cross-sectional view of a filter bed including the lateral shown in Figure 7.

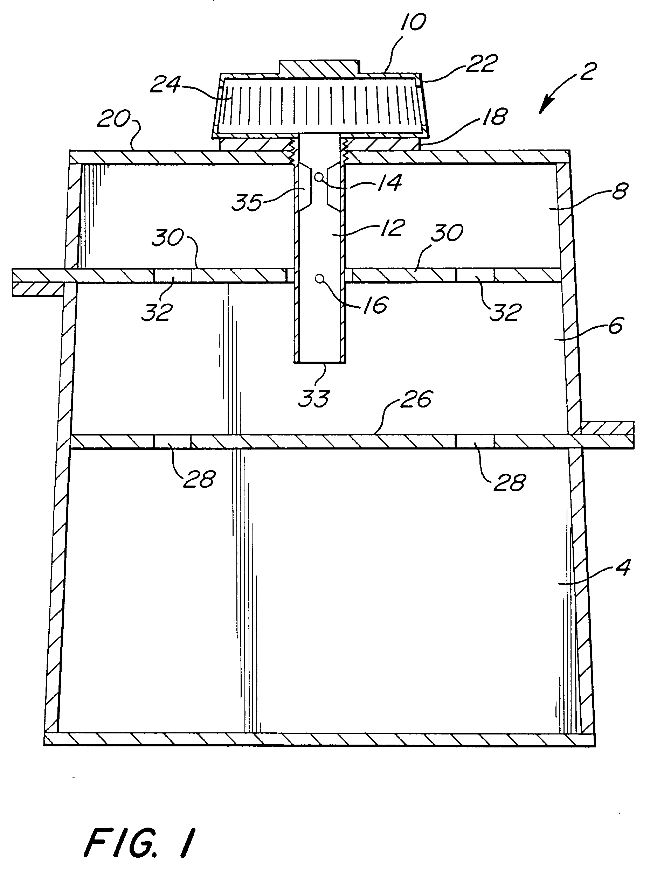

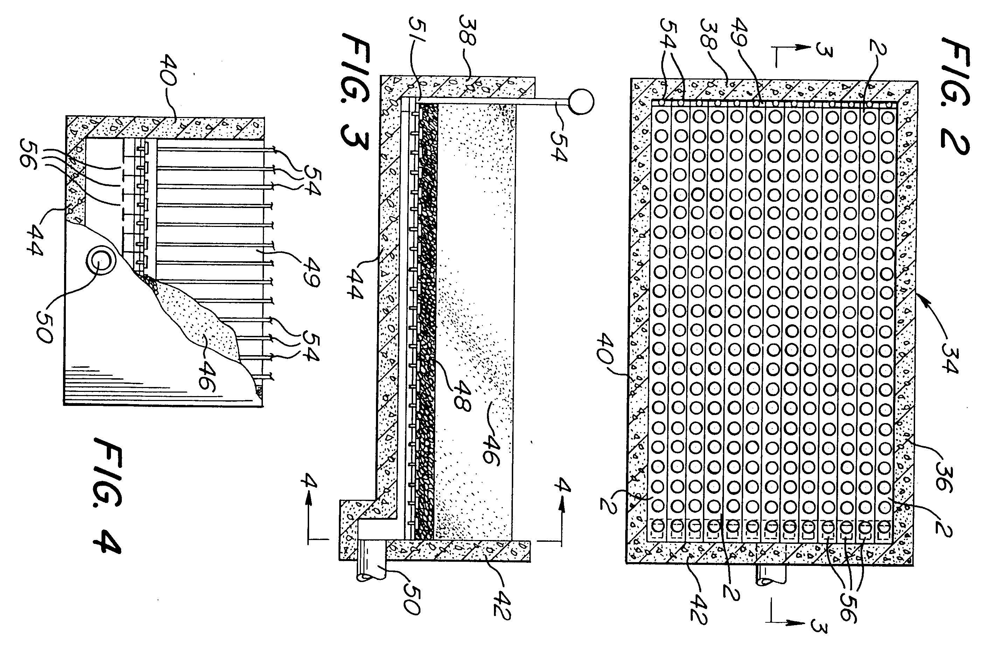

The same reference numerals are used where possible to describe the different embodiments. As shown in Figure 2, a filter bed 34 has four side walls 36, 38, 40, 42. A floor of parallel pipes 2, so called underdrain laterals, extends along the bottom 44 (Figure 3) of the bed 34. As shown in Figures 3 and 4, above the laterals is a single layer of gravel 48, and above that a layer of granular material 46. As shown in Figure 1, each underdrain lateral 2 comprises a lower, primary chamber 4, a middle, compensating chamber 6 and an upper, gas chamber 8. A row of nozzle assemblies 10 extends along the top of each lateral 2. Each nozzle assembly 10 has a threaded pipe or stem 12 with holes 14 and 16 for the input of gas during cleansing. Each nozzle assembly 10 is mounted on a spacer 18 on the top wall 20 of the underdrain lateral 2, with the stem passing through a threaded hole in the wall 20 and the stem having engaging threads towards the upper end thereof. The nozzle has a frustoconical head portion 22 having narrow slots 24 dimensioned to prevent ingress of granular material. The slots measure about 1/32 inch (about 0.8mm) wide and 1 inch (25.4mm long).

The chambers 4 and 6 are separated by a horizontal separator wall 26, having holes 28 to equalise water distribution and pressures during the filtering and the gas and backwash cycles. A horizontal baffle 30 separates the compensating chamber 6 from the gas chamber 8 and has holes 32 to equalise gas and water pressure during the filtering and the gas and backwash cycles. Gas inlet pipes 54 feed gas into the inlet end of a respective gas chamber 8 of each lateral 2. Cutouts 51 at the inlet end of each of the underdrain laterals 2 connect the gas chambers 8 to equalise gas pressure and allow an equal flow of gas throughout all the gas chambers 8.

As shown in Figure 4 holes 56 in the bottom of the primary chambers 4 at each end of each lateral 2 provide for equalisation of water pressure and water flow throughout the underdrain. Below the laterals is a flume 50.

When filtering waste water, the water drains down through the granular media level 46 and then through the gravel packing level 48 as shown in Figure 3, into the nozzles 10, through slots 24 and into the threaded stem 12, and into chamber 6. The waste water then flows through holes 28 and is then discharged through the flume 50.

During backwash, water is forced back up through the primary chamber 4, into the compensating chamber 6 and up through the threaded stems 12. It then flows through the slots 24 into the gravel layer 48 and upward into and through granular layer 46 from whence it is conducted out of the filter bed and discharged. Gas is fed via inlets 54 into each gas chamber 8 and flows through holes 14 and 16 into threaded stem 12 and out of the distribution slots 24 through the gravel layer and then through the granular layer. The gas bubbles formed agitate the granular material to loosen accumulated waste material which was deposited during the filtering. The gas entering the gas chamber 8 forces the water in the underdrain downward until the level of the water is slightly below the top of the compensating chamber 6. With the water level in the compensating chamber 6 just below the horizontal baffle 30, the amplitude of standing waves is reduced and water turbulence does not occur as in known devices. Backwash water enters the opening 33 at the bottom of the stem 12 and gas enters the threaded stem 12 through the orifices 14 and 16. The gas and water mixture then goes through the distribution holes 24 and then rises through the gravel and granular levels from whence they are discharged.

The threaded portion of the stem 12 enables, during installation and maintenance, the setting of the entrance 33 of the stems 12 to uniform and exact levels above the underdrain floor to ensure that the water pressure and flow entering the stems 12 are equalised throughout the entire filtering system. By placing all stems at the same height, the holes 14 and 16 are positioned for even gas pressure and flow in the filtering system.

The inside diameter of threaded stem 12 may be reduced by inserts 35 placed near the hole 14 to reduce pressure during backwash allowing greater gas flow through the hole 14.

After the gas cycle described above, a cycle of backwash water or a combined cycle of backwash water and gas may be used to clear away the waste material which has been loosened during the gas cycle.

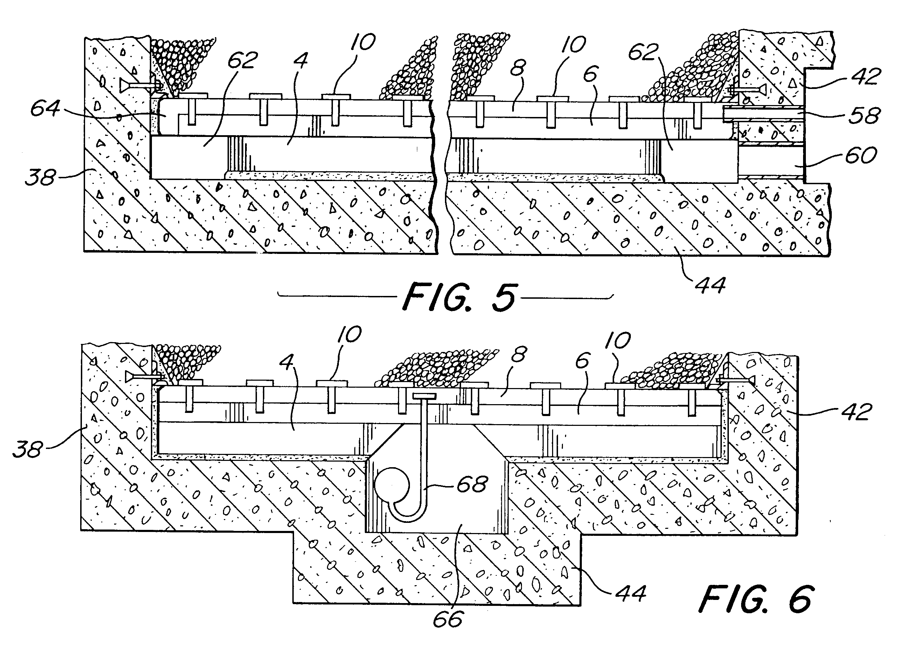

The arrangement shown in Figures 2, 3, and 4 is a front flume design. Water and gas distribution can be however achieved through a wall sleeve design as shown in Figure 5 or through a centre flume design as shown in Figure 6. The choice of distribution design depends upon the size of the filtering system, the amount of water to be filtered and the like.

In the embodiment shown in Figure 5 both gas inlet pipes 58 and liquid flume 60 are in placed in the side wall 42. Manifolds 62 at both ends of each lateral 2 connect the primary chambers 4 of each lateral 2 together to assure equal distribution of water pressure and flow throughout the underdrain. The gas chambers 8 of the underdrain laterals 2 are connected together at one end of the laterals 2 by manifold 64 which equalises gas pressure and flow throughout the underdrain.

Figure 6 shows a centre flume gas and water distribution system having a liquid flume 66 centered in bottom wall 44. The gas enters into the gas chambers 8 via J tube 68.

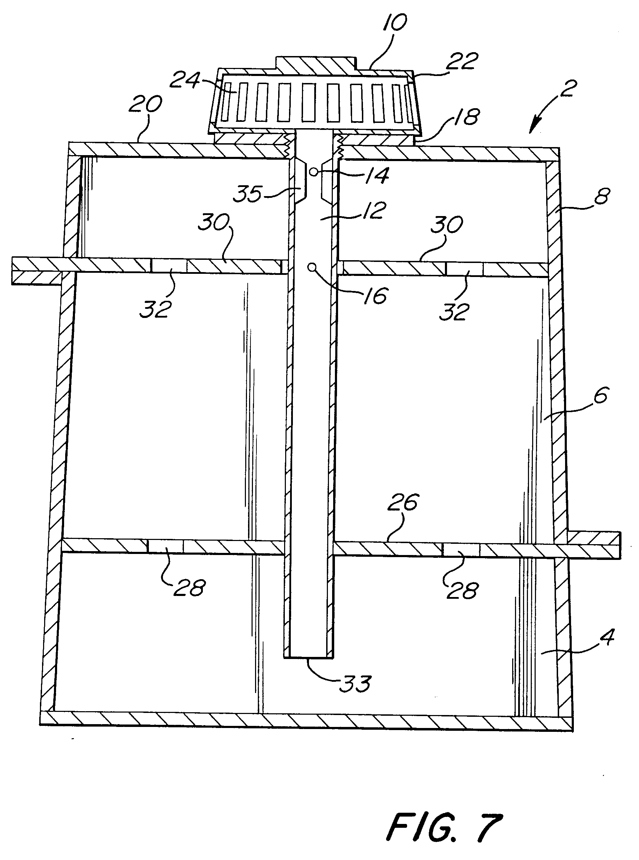

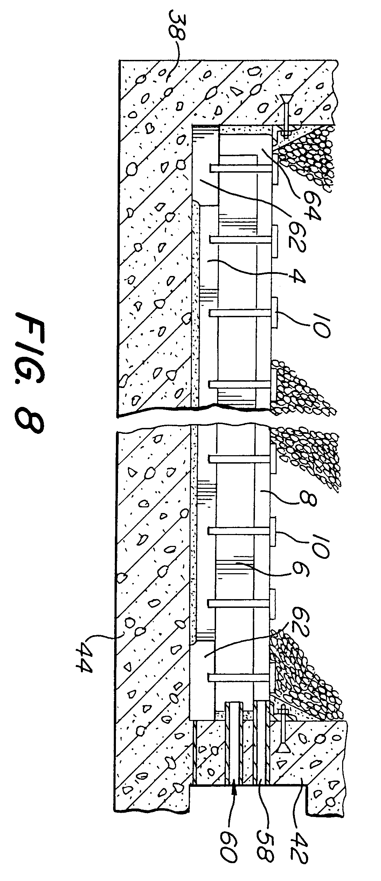

In the embodiment of Figures 7 and 8, the slots 24 in the upper member 22 of the nozzle assembly 10 are relatively larger, say about 1/4 inch (say 6.5mm) wide by 1 inch (25.4mm) long. The stem 12 is extended until the entrance 33 is in the lower chamber 4. The middle chamber 6 is made taller and the lower chamber 4 is shortened so that chamber 6 is the primary chamber into which the backwash water is inserted and chamber 4 is the compensating chamber. Laterals according to Figure 7 are used in a bed according to Figure 8. Backwash water enters through liquid flume 60 into the middle primary chamber and gas enters through gas inlet pipes 58 into the chamber 8. This embodiment is intended to guard against the possibility that after about five years of service, waste material might clog the openings of the distribution slots 24. The holes 24 are therefore relatively wider. This necessitates three to four layers of the gravel 48 beneath the granular material 46. The larger size gravel is placed in the lower layer with each higher layer being successively of smaller size with the smallest size gravel in the top layer, beneath the granular layer. (In the first embodiment, on the other hand, only one gravel layer is required because smaller size gravel can be used abutting the nozzle assembly 10).

With this system it is possible that large gulps of air entering with the backwash water could lift the finer gravel which could be washed out when the backwash water is discharged. Therefore, the threaded stem 12 made longer so that the entrance 33 is considerably below the backwash intake into the middle chamber 6 to prevent air from entering into the stem 12 and thence through the distribution slots 24 rising up through the gravel layers.

The reduction in turbulence during the cleansing cycles in all the embodiments of apparatus according to the invention can reduce the amount of granular media required as less mixing between the granular and gravel layers occurs as well as less shifting of granular materials causing uneven amounts of material at various locations in the filter bed. While the systems in common use today require six layers of gravel, the first embodiment requires only one layer of gravel, while the last embodiment requires only three or four layers of gravel.

The underdrain laterals 2 may be composed of ceramic, fibre glass, plastic, metal or any other suitable material.

The invention also provides an easy means for levelling the backwash liquid intakes to provide for even liquid distribution by rotating the threaded stems of the nozzles. Also, through the use of cut outs in the underdrain laterals 2, gas and liquid pressures and flow are equalised within each of the underdrain laterals and throughout the filter bed 34.

Although the embodiments described are used to purify waste water the invention can be applied to the treatment of liquids other than waste water.

## Claims

1. Filter apparatus comprising a bed (34) to receive liquid to be filtered, filter media (46, 48) being located in the bed (34), an underdrain (2) beneath the media, the underdrain comprising a plurality of underdrain laterals (2) and containing gas chambers (8) characterised by means to provide that substantially only gas is present in the gas chamber (8) when cleaning the filter media (46, 48).

2. Apparatus according to Claim 1 characterised in that the laterals (2) comprise a primary chamber (4), a compensating chamber (6) above the primary chamber (4), the gas chamber (8) being above the compensating chamber (6).

3. Apparatus according to Claim 2 characterised in that a horizontal baffle (30) is present between the compensating chamber (6) and the gas chamber (8), the baffle being positioned to minimise liquid standing waves and turbulence in the other chambers (4, 6) when gas is supplied (54) into the gas chamber (8).

4. Apparatus according to Claim 3 characterised in that the baffle (30) has holes (32) therein to compensate for differences in liquid pressures and flows and to urge liquid away from the gas chamber (8).

5. Apparatus according to any preceding Claim characterised in that the laterals (2) have a top wall (20) having spaced apart openings, each containing a nozzle assembly (10), the assembly comprising a head (10) with distribution holes (24) located above the top wall (20) and a pipe (12) extending down into the lateral (2).

6. Apparatus according to Claim 5 characterised in that the pipe (12) extends through the gas chamber (8) into the compensating chamber (6), and has at least one hole (14, 16) for entry of gas into the pipe (12) from the gas chamber (8) and an entrance (33) for entry of backwash liquid from the compensating chamber (6).

7. Apparatus according to Claim 6 or 7 characterised in that the pipe (12) is connected to the top (20) of the lateral (2) by adjustment means.

8. Apparatus according to any of Claims 5 to 7 characterised by an insert (35) positioned within the pipe (12) adjacent to a hole (14).

9. Apparatus according to any of Claims 2 to 8 characterised in that a horizontal separator wall (26) is present between the primary chamber (4) and the compensating chamber (6), the wall (26) containing holes (28) to equalise differences in liquid pressures and flow.

10. A method of cleaning filter media (46, 48) located in a filter bed (34), an underdrain being present beneath the media, the underdrain comprising a plurality of laterals (2) in communication with a flume (50), the method comprising passing liquid and/or gas up through the bed to loosen solids deposited on the media from the filtered liquid, characterised by passing gas into the media via a gas chamber (8) in the laterals (2) and ensuring that the chambers (8) contain substantially only gas during the cleansing step.

11. A method according to Claim 10 characterised by urging gas passing through the gas chamber (8) through holes (32) in a baffle (30) defining a wall of the gas chamber (8) to urge backwash liquid away from the gas chamber (8) and suppress turbulence of the liquid.

12. A method according to Claim 11 characterised in that the baffle (30) is disposed generally horizontally and the gas chamber (8) is in the upper part of the lateral (2).

13. A method according to Claim 10, 11 or 12 characterised by passing gas from the gas chamber (8) into a hole (14, 16) in a pipe (12) extending across the gas chamber (8), the pipe (12) leading up to the media (46, 48).

14. A method according to Claim 13 characterised by connecting a nozzle assembly (10) having holes (14, 16) to the upper end of the pipe (12).

15. A method according to Claim 14 characterised by providing adjusting means to locate the height of the pipe with respect to the gas chamber (8).

16. A nozzle assembly (10) for use in a filter bed (34) having underdrain laterals (2), the assembly comprising a head (10) with distribution holes (24) characterised by a pipe (12) extending down into the lateral (2), the pipe (12) having at least one side hole (14, 16) for entry of cleansing gas into the pipe (12) and an entrance (33) adjacent the end of the pipe (12) for entry of backwash liquid.

17. An assembly according to Claim 16 characterised in that the pipe (12) includes adjustment means by which it may be mounted in to the top (20) of the lateral (2).

18. An assembly according to Claim 16 or 17 characterised by an insert (35) positioned within the pipe (12) adjacent to a hole (14).
